(19) Europäisches Patentamt
European Patent Office
Office européen des brevets

(11) **EP 3 589 519 B1**

(12) **FASCICULE DE BREVET EUROPEEN**

(45) Date de publication et mention de la délivrance du brevet:
**11.09.2024 Bulletin 2024/37**

(21) Numéro de dépôt: **18709685.4**

(22) Date de dépôt: **22.02.2018**

(51) Classification Internationale des Brevets (IPC):
**B60W 20/11** *(2016.01)*   **B60W 30/188** *(2012.01)*
**B60W 20/30** *(2016.01)*   **B60W 10/06** *(2006.01)*
**B60W 10/08** *(2006.01)*   **B60W 10/11** *(2012.01)*
**B60W 50/00** *(2006.01)*

(52) Classification Coopérative des Brevets (CPC):
**B60W 20/11; B60W 10/06; B60W 10/08;**
**B60W 10/11; B60W 20/30; B60W 30/188;**
B60W 2050/0013; B60W 2050/0022;
B60W 2050/0041; B60W 2510/0623;
B60W 2510/244; B60W 2520/10; B60W 2540/10;
B60W 2710/0677; B60W 2710/086;   (Cont.)

(86) Numéro de dépôt international:
**PCT/FR2018/050417**

(87) Numéro de publication internationale:
**WO 2018/158524 (07.09.2018 Gazette 2018/36)**

(54) **PROCÉDÉ DE CALCUL D'UNE CONSIGNE DE PILOTAGE D'UN GROUPE MOTOPROPULSEUR HYBRIDE DE VÉHICULE AUTOMOBILE**

VERFAHREN ZUR BERECHNUNG EINES STEUERUNGSSOLLWERTS EINES HYBRIDANTRIEBSSTRANGS EINES KRAFTFAHRZEUGS

METHOD FOR CALCULATING A CONTROL SETPOINT OF A HYBRID POWERTRAIN OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2017 FR 1751679**

(43) Date de publication de la demande:
**08.01.2020 Bulletin 2020/02**

(73) Titulaires:
- **Renault s.a.s**
  **92100 Boulogne Billancourt (FR)**
- **Université d'Orléans**
  **45100 Orléans (FR)**

(72) Inventeurs:
- **HADJ-SAID, Souad**
  **78280 Guyancourt (FR)**
- **KETFI-CHERIF, Ahmed**
  **78180 Montigny le Bretonneux (FR)**
- **COLIN, Guillaume**
  **45160 Olivet (FR)**

(74) Mandataire: **Jacobacci Coralis Harle**
  **32, rue de l'Arcade**
  **75008 Paris (FR)**

(56) Documents cités:
**DE-A1- 102013 014 667    DE-A1- 102015 201 549**
**FR-A1- 3 014 062**

(52) Classification Coopérative des Brevets (CPC):
(Cont.)
B60W 2710/1005; Y02T 10/62; Y02T 10/72

**Description**

DOMAINE TECHNIQUE AUQUEL SE RAPPORTE L'INVENTION

La présente invention concerne de manière générale les véhicules automobiles équipés de groupes motopropulseurs hybrides, c'est-à-dire de groupes motopropulseurs comportant un moteur électrique et un moteur à combustion interne doté d'une boîte de vitesses.

Elle concerne plus particulièrement un procédé de calcul d'une consigne de pilotage d'un tel groupe motopropulseur, qui comprend :

- une étape d'acquisition d'une valeur relative à une puissance demandée au niveau des roues motrices du véhicule automobile, et
- une étape de détermination de la contribution du moteur électrique et de celle du moteur à combustion interne afin de satisfaire la demande de puissance au niveau des roues motrices.

ARRIERE-PLAN TECHNOLOGIQUE

Un véhicule hybride comporte une chaîne de traction thermique conventionnelle (avec un moteur à combustion interne, un réservoir de carburant, et une boîte de vitesses) et une chaîne de traction électrique (avec une batterie de traction et au moins un moteur électrique).

Un tel véhicule hybride est susceptible d'être tracté par sa seule chaîne de traction électrique, ou par sa seule chaîne de traction thermique, ou encore simultanément par ses deux chaînes de traction électrique et thermique.

On cherche toujours à minimiser la consommation en courant et en carburant des deux moteurs afin de réduire au mieux les rejets de composants polluants dans l'atmosphère et de garantir au véhicule la meilleure autonomie possible.

Pour atteindre cet objectif, on cherche à répartir au mieux la puissance totale à fournir entre le moteur électrique et le moteur à combustion interne.

On connaît ainsi du document WO2016070887 une méthode d'optimisation convexe qui permet, en règle générale, de trouver une bonne répartition entre la puissance électromécanique fournie par le moteur électrique et la puissance thermomécanique fournie par le moteur à combustion interne.

La demanderesse a toutefois constaté que cette méthode ne donnait pas toujours des résultats aussi efficaces que souhaité.

On connaît du document DE102015201549 un système de propulsion hybride comprenant un moteur à combustion interne, un moteur électrique et un contrôleur hybride qui permet de passer d'un mode tout-électrique à un mode hybride. Le procédé divulgué dans ce document consiste à calculer la consigne de commande de la boîte de vitesse et celles des moteurs de façon simultanée.

On connaît par ailleurs du document DE102013014667 un procédé de calcul d'une consigne de pilotage d'un groupe motopropulseur hybride, qui consiste à trouver le mode de déplacement optimal (hybride ou non).

On connaît enfin du document FR 3 014 062 A1 un procédé de gestion de l'énergie d'un groupe motopropulseur de véhicule hybride par minimisation sur chaque point de fonctionnement du moteur d'un critère énergétique lié à la somme de la consommation du moteur thermique et de la consommation électrique de la machine électrique, le critère minimisé étant un critère mixte, somme du critère énergétique et d'un critère de désagrément, lié à la gestion des modes cinématiques de la transmission.

OBJET DE L'INVENTION

Afin de remédier à cet inconvénient, la présente invention propose d'intégrer, dans la méthode d'optimisation convexe précitée, un troisième paramètre qui est le rapport de boîte de vitesses.

Plus particulièrement, on propose selon l'invention un procédé de pilotage tel que défini dans la revendication 1.

L'objectif peut par exemple être plus précisément de minimiser la somme des consommations en carburant du moteur à combustion interne et en courant du moteur électrique.

Ainsi, grâce à l'invention, le triplet de valeurs trouvé permet de s'assurer que le rapport de boîte de vitesses engagé est le meilleur et que, sur ce rapport de boîte, la répartition entre puissance électromécanique et puissance thermomécanique est optimale.

Comme cela apparaîtra clairement dans la suite de cet exposé, cette solution a pour avantage d'être robuste et facile à implémenter quels que soient le type du moteur électrique, le type du moteur à combustion interne et le type de la batterie de traction utilisés.

D'autres caractéristiques avantageuses et non limitatives du procédé de calcul conforme à l'invention sont définies dans les revendications 2 et suivantes.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une figure schématique d'une chaîne de traction d'un véhicule automobile hybride ;
- la figure 2 est un graphique illustrant une façon d'obtenir l'expression mathématique d'un Hamiltonien selon un procédé conforme à l'invention ;
- les figures 3A à 3C sont des graphiques illustrant une façon d'obtenir la valeur optimale d'une puissance thermique selon le procédé conforme à l'invention ;
- la figure 4 est un tableau illustrant une autre façon d'obtenir la valeur optimale de la puissance thermique ; et
- la figure 5 est un graphique illustrant une façon d'obtenir la valeur optimale d'un rapport de boîte de vitesses selon un procédé conforme à l'invention.

Classiquement, un véhicule automobile comporte un châssis qui supporte notamment un groupe motopropulseur, des éléments de carrosserie et des éléments d'habitacle.

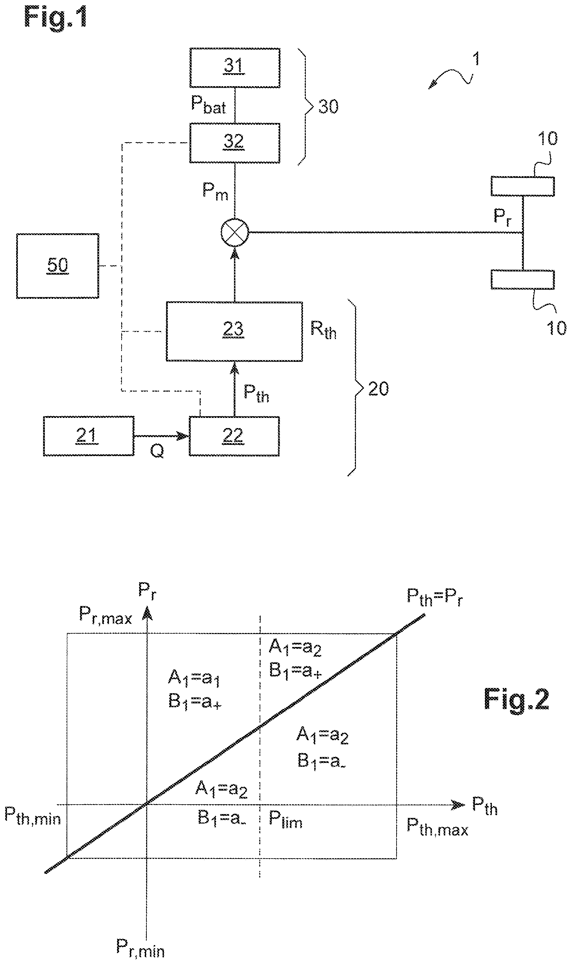

Comme le montre la figure 1, dans un véhicule automobile 1 du type hybride, le groupe motopropulseur hybride comporte une chaîne de traction thermique 20 et une chaîne de traction électrique 30.

La chaîne de traction thermique 20 comporte notamment un réservoir de carburant 21, un moteur à combustion interne 22 alimenté en carburant par le réservoir, et une boîte de vitesses 23 couplée, en entrée, au moteur à combustion interne 22 et, en sortie, aux roues motrices 10 du véhicule automobile.

La chaîne de traction électrique 30 comporte quant à elle une batterie de traction 31 et un (ou, en variante, plusieurs) moteur électrique 32 qui est alimenté en courant électrique par la batterie de traction 31 et dont l'arbre de sortie est couplé aux roues motrices 10 du véhicule automobile.

Ces deux chaînes de traction se rejoignent donc pour permettre d'entraîner en rotation les roues motrices 10 du véhicule automobile.

Le véhicule automobile 1 comprend par ailleurs une unité électronique de commande (ou ECU pour "Electronic Control Unit"), appelée ici calculateur 50, permettant de commander les deux chaînes de traction précitées (notamment les puissances développées par le moteur électrique 32 et par le moteur à combustion interne 22).

Le calculateur 50 comprend un processeur et une mémoire qui enregistre des données utilisées dans le cadre du procédé décrit ci-dessous.

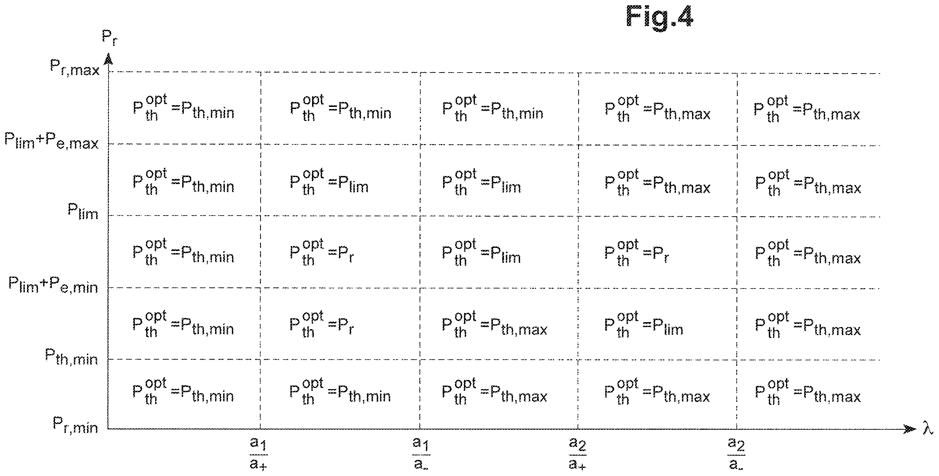

Cette mémoire enregistre notamment un tableau du type de celui illustré sur la figure 4 (qui sera détaillé dans la suite de cet exposé).

Elle enregistre également une application informatique, constituée de programmes d'ordinateur comprenant des instructions dont l'exécution par le processeur permet la mise en oeuvre par le calculateur 50 du procédé décrit ci-après.

Pour la mise en oeuvre de l'invention, le calculateur 50 est connecté à des capteurs.

Il est notamment connecté à un capteur permettant de mesurer dans quelle mesure le véhicule doit accélérer ou décélérer. Il peut s'agir d'un capteur mesurant la position de la pédale d'accélération du véhicule, ou d'un capteur mesurant la vitesse du véhicule (dans le cas où le véhicule doit suivre une consigne de vitesse imposée par le conducteur).

Quoi qu'il en soit, le calculateur 50 est ainsi en mesure d'acquérir la valeur d'une donnée relative à la puissance requise par le conducteur du véhicule pour faire avancer ce véhicule avec la dynamique souhaitée. On considérera ici que le calculateur 50 acquiert plus précisément la valeur d'une puissance que les roues motrices 10 doivent recevoir, ci-après appelée « puissance aux roues $P_r$ ».

On pourra définir ici d'autres notions permettant de bien comprendre l'invention.

La valeur de la puissance fournie par le seul moteur électrique 32 aux roues motrices 10 sera ici appelée « puissance électromécanique $P_m$ ».

La valeur de la puissance fournie par la batterie de traction 31 au moteur électrique 32 sera ici appelée « puissance électrique $P_{bat}$ ».

La valeur de la puissance fournie par le seul moteur à combustion interne 22 à la boîte de vitesses 23 sera ici appelée « puissance thermomécanique $P_{th}$ ».

Le rapport de la boîte de vitesses 23 sera ici appelé « rapport de boîte Rth ».

La consommation en carburant du moteur à combustion interne 22 sera appelée « débit de carburant Q ».

L'état de charge de la batterie de traction 31, exprimé en pourcentage, sera appelé « niveau de charge SOC ».

L'objet de l'invention consiste à déterminer la contribution que le moteur électrique 32 et que le moteur à combustion interne 22 doivent chacun apporter pour satisfaire la demande de puissance aux roues $P_r$ requise par le conducteur, avec le rapport de boîte $R_{th}$ le plus adapté, afin de garantir :

- une consommation de carburant minimale et
- un niveau de charge électrique SOC supérieur à un seuil (à l'issue par exemple d'un trajet mémorisé dans un appareil de navigation et de géolocalisation).

Autrement formulé, l'objet du procédé qui sera ci-après décrit sera de trouver, en fonction de la valeur de la puissance aux roues $P_r$ requise, le triplet {$P_{th}^{opt}$, $R_{th}^{opt}$, $P_m^{opt}$} qui garantie une consommation énergétique minimale (l'exposant « opt » signifiant qu'il s'agit de la valeur optimale).

Comme cela apparaitra bien dans la suite, la prise en compte du rapport de boîte $R_{th}$ dans le procédé rend le problème hybride au sens mathématique.

Pour assurer une bonne compréhension de l'invention, le procédé permettant d'aboutir au calcul du triplet {$P_{th}^{opt}$, $R_{th}^{opt}$, $P_m^{opt}$} sera bien détaillé dans l'exposé qui suit, mais en pratique, le procédé réellement mis en oeuvre par le calculateur 50 embarqué dans le véhicule sera plus simple. L'expression « en pratique » sera alors utilisée ci-après pour distinguer de l'ensemble de cet exposé les étapes qui seront réellement mises en oeuvre par le calculateur 50.

Le procédé selon l'invention se base sur une modélisation analytique de la consommation en carburant du moteur à combustion interne 22 et de la consommation en courant électrique du moteur électrique 32.

Le modèle analytique du débit de carburant Q du moteur à combustion interne 22 en fonction de la puissance thermomécanique $P_{th}$ est ici donné par l'équation suivante :

$$Q(P_{th}) = \begin{cases} a_1 . P_{th} + Q_0 & si\ P_{th} \in [P_{th,min}\ ;\ P_{lim}] \\ a_2 . (P_{th} - P_{lim}) + Q_{lim} & si\ P_{th} \in [P_{lim}\ ;\ P_{th,max}] \end{cases} \qquad [eq1]$$

avec $a_1$ et $a_2$ deux constantes telles que $a_1 < a_2$.

Dans ce modèle, les constantes $a_1$ et $a_2$ sont obtenues de façon expérimentale pour chaque modèle de véhicule automobile (en réalisant plusieurs tests sur le modèle de véhicule considéré et en estimant leurs valeurs par la méthode des moindres carrés).

Les paramètres $Q_0$, $Q_{lim}$, $P_{th,min}$, $P_{lim}$ et $P_{th,max}$ sont quant à eux des variables qui varient en fonction du régime $\omega_{th}$ du moteur à combustion interne 22.

Ces variables sont modélisées de la façon suivante :

$$Q_0(\omega_{th}) = q_2 . \omega_{th}^2 + q_1 . \omega_{th} + q_0,$$

$$Q_{lim}(\omega_{th}) = a_1 . P_{lim} + Q_0(\omega_{th}),$$

$$P_{lim}(\omega_{th}) = p_1 . \omega_{th} + p_0,$$

$$P_{th,min}(\omega_{th}) = k_1 . \omega_{th} + k_0,$$

$$P_{th,max}(\omega_{th}) = - Q_0(\omega_{th}) / a_1.$$

Dans cette modélisation, $q_0$, $q_1$, $q_2$, $p_0$, $p_1$, $k_0$ et $k_1$ sont des constantes obtenues de façon expérimentale pour chaque modèle de véhicule automobile.

Le modèle analytique de la puissance électrique $P_{bat}$ consommée en fonction de la puissance électromécanique $P_m$ que le moteur électrique 32 doit fournir est ici donné par l'équation suivante :

$$P_{bat}(P_m) = \begin{cases} a_- . P_m + b & si\ P_m \in [P_{e,min}\ ;\ 0] \\ a_+ . P_m + b & si\ P_m \in [0\ ;\ P_{e,max}] \end{cases} \qquad [eq2]$$

avec $a_- < a_+$.

Dans ce modèle, les paramètres $a_-$, $a_+$, $b$, $P_{e,min}$ et $P_{e,max}$ sont des variables qui varient en fonction de la vitesse de rotation du moteur électrique 32.

Le bilan mécanique du groupe motopropulseur hybride est par ailleurs donné par l'équation suivante :

$$P_r = P_{th} + P_m \qquad \text{[eq3]}$$

Comme cela a été exposé supra, le calculateur 50 va chercher à optimiser la puissance thermomécanique $P_{th}$, la puissance électromécanique $P_m$, et le rapport de boîte $R_{th}$, de façon à minimiser la consommation énergétique du groupe motopropulseur hybride sur le trajet choisi.

La méthode utilisée pour résoudre ce problème d'optimisation se base ici sur le principe du minimum de Pontriaguine. Ce principe s'applique à un opérateur mathématique particulier : un Hamiltonien qui est fonction de la puissance électromécanique $P_m$ que le moteur électrique 32 doit fournir et de la puissance thermomécanique $P_{th}$ que le moteur à combustion interne 22 doit fournir.

Selon le principe du minimum de Pontriaguine, cet Hamiltonien doit être minimisé afin de trouver les valeurs optimales recherchées.

Cet Hamiltonien pourrait être défini de diverses manières.

Il s'exprime ici sous la forme de la somme, d'une part, du débit de carburant Q, et, d'autre part, du produit de la puissance électrique $P_{bat}$ consommée et d'un facteur de pondération À (également appelé « facteur d'équivalence »).

L'Hamiltonien s'exprime ainsi plus précisément sous la forme :

$$H_{hyb}(P_{th}, P_m, \lambda) = Q(P_{th}) + \lambda . P_{bat}(P_m) \qquad \text{[eq4]}$$

Le facteur de pondération À est choisi afin d'assurer, à un moment déterminé, que la batterie de traction 31 présente un niveau de charge SOC supérieur à un seuil prédéterminé.

Il est ainsi déterminé en fonction au moins du niveau de charge SOC instantané de la batterie de traction 31.

A titre d'exemple, il peut être choisi en fonction au moins du niveau de charge SOC instantané de la batterie de traction 31 et en fonction d'un seuil au-dessus duquel on souhaite que le niveau de charge SOC se trouve à l'issue par exemple du trajet mémorisé dans l'appareil de navigation et de géolocalisation.

En combinant les équations eq3 et eq4, on peut écrire :

$$H_{hyb}(P_{th}, P_r, \lambda) = Q(P_{th}) + \lambda . P_{bat}(P_r - P_{th}) \qquad \text{[eq5]}$$

ou encore, grâce aux équations eq1 et eq2 :

$$H_{hyb}(P_{th}, P_r, \lambda) = A_1 . P_{th} + A_0 + \lambda . (B_1(P_r - P_{th}) + b) \qquad \text{[eq6]}$$

C'est-à-dire :

$$H_{hyb}(P_{th}, P_r, \lambda) = (A_1 - \lambda . B_1) . P_{th} + A_0 + \lambda . b + \lambda . B_1 . P_r \qquad \text{[eq7]}$$

Dans les équations eq6 et eq7, les coefficients $A_0$, $A_1$ et $B_1$ présentent des valeurs variables selon les valeurs de la puissance thermomécanique $P_{th}$ et de la puissance électromécanique $P_m$.

Compte tenu des équations eq1 et eq2, on peut en effet écrire :

$$A_0 = \begin{cases} Q_0 & si\ P_{th} \in [P_{th,min}\ ;\ P_{lim}] \\ -a_2 . P_{lim} + Q_{lim} & si\ P_{th} \in [P_{lim}\ ;\ P_{th,max}] \end{cases} \qquad \text{[eq8]}$$

$$A_1 = \begin{cases} a_1 & si\ P_{th} \in [P_{th,min}\ ;\ P_{lim}] \\ a_2 & si\ P_{th} \in [P_{lim}\ ;\ P_{th,max}] \end{cases} \qquad \text{[eq9]}$$

$$B_1 = \begin{cases} a_- & si\ P_m \in [P_{e,min}\ ;\ 0] \\ a_+ & si\ P_m \in [0\ ;\ P_{e,max}] \end{cases} \qquad\qquad \text{[eq10]}$$

Comme le montre la figure 2, les coefficients $A_0$, $A_1$ et $B_1$ présentent des valeurs qui sont alors facilement déterminables en fonction de la puissance thermomécanique $P_{th}$, de la puissance aux roues $P_r$, et du paramètre $P_{lim}$.

On comprend de l'équation *eq7* que l'Hamiltonien s'exprime sous la forme d'une fonction affine de la puissance thermomécanique $P_{th}$.

La puissance thermomécanique $P_{th}$ optimale, notée $P_{th}^{opt}$, est celle qui minimise l'Hamiltonien. On comprend donc que sa valeur peut être déterminée en fonction du signe du terme « A1 - À.B1 », et que sa valeur dépend du facteur de pondération À et de la puissance aux roues $P_r$.

Plus précisément, l'Hamiltonien peut présenter quatre pentes possibles, à savoir : ($a_1$ - À.$a+$), ($a_1$ - $\lambda.a_-$), ($a_2$ - À.$a+$) et ($a_2$ - $\lambda.a_-$).

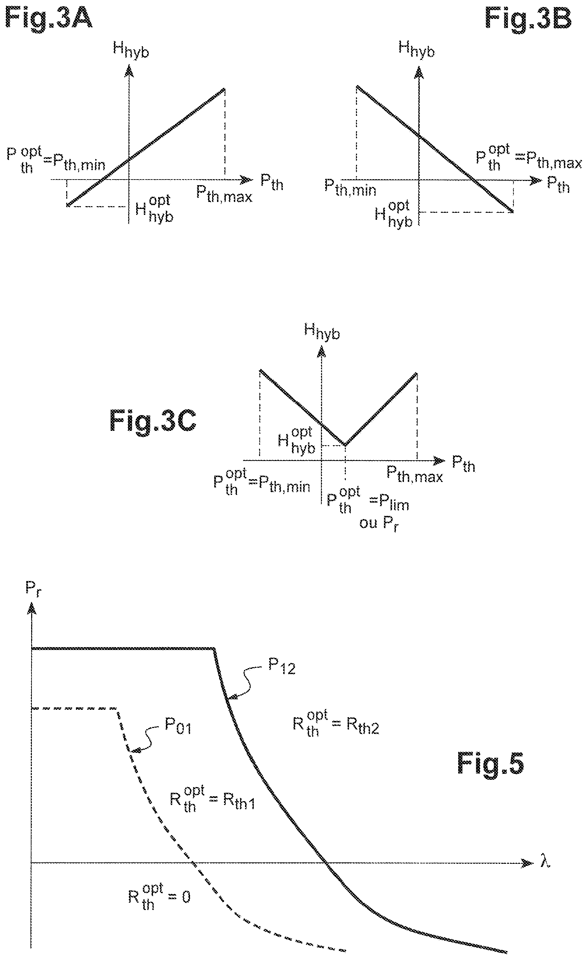

Deux premiers de ces quatre cas de figures sont représentés sur les figures 3A et 3B, et les deux autres sont illustrés sur la figure 3C.

En pratique, le calculateur 50 embarqué pourra alors déterminer très simplement la puissance thermomécanique optimale $P_{th}^{opt}$. Pour cela, il lui suffira en effet alors de lire une cartographie mémorisée dans la mémoire morte du calculateur 50, cette cartographie étant illustrée sur la figure 4.

Comme le montrent bien les figures 3A à 3C et la figure 4, la résolution du principe du minimum indique en effet que la puissance thermomécanique optimale $P_{th}^{opt}$ pourra prendre l'une des quatre valeurs suivantes :

- la valeur du paramètre $P_{th,min}$,
- la valeur du paramètre $P_{th,max}$,
- la valeur du paramètre $P_{lim}$, et
- la valeur de la puissance aux roues $P_r$.

Une fois que le calculateur 50 a lu dans cette cartographie la valeur de la puissance thermomécanique optimale $P_{th}^{opt}$, il peut calculer simplement la valeur de la puissance électromécanique optimale $P_m^{opt}$, grâce à l'équation eq3.

Reste alors à déterminer le rapport de boîte optimal $R_{th}^{opt}$.

Le rapport de boîte $R_{th}$ peut présenter plusieurs valeurs discrètes, ce que l'on peut écrire :

$$R_{th} = \{0, 1, 2, …, N\}, \qquad\qquad \text{[eq11]}$$

avec 0 correspondant au cas où le moteur à combustion interne 22 est arrêté, et N correspondant au nombre de rapports de la boîte de vitesses 23.

En remplaçant dans l'équation eq7 le terme $P_{th}$ par le terme $P_{th}^{opt}$, on obtient l'expression de $H_{hyb}^{opt}$.

La valeur de cet Hamiltonien optimal $H_{hyb}^{opt}$ varie selon le rapport de boîte $R_{th}$ employé. On pourra donc écrire, par simplification, cet Hamiltonien optimal de la façon suivante : $H_{hyb}^{opt}(R_{th})$.

Afin de déterminer la valeur du rapport de boîte optimal $R_{th}^{opt}$, on peut alors à nouveau appliquer le principe du minimum de Pontriaguine, de façon discrète, ce que l'on peut écrire :

$$R_{th}^{opt} = \arg \left(\min_{R_{th}} H_{hyb}^{opt}(R_{th})\right) \qquad\qquad \text{[eq12]}$$

Autrement formulé, le rapport de boîte optimal $R_{th}^{opt}$ est celui pour lequel l'Hamiltonien optimal $H_{hyb}^{opt}$ est le plus petit.

La résolution de l'équation *eq12* revient alors à :

- calculer la valeur de l'Hamiltonien optimal $H_{hyb}^{opt}$ pour chaque rapport de boîte $R_{th}$, puis à
- sélectionner le rapport de boîte $R_{th}$ pour lequel la valeur de l'Hamiltonien optimal $H_{hyb}^{opt}$ est la plus basse.

Pour cela, il est possible d'opérer de diverses manières.

Une manière simple de résoudre l'équation *eq12* peut consister à étudier le signe des différences entre chaque paire de valeurs de l'Hamiltonien optimal $H_{hyb}^{opt}(0)$, $H_{hyb}^{opt}(1)$,... $H_{hyb}^{opr}(N)$.

Pour la clarté de l'exposé, afin de simplifier la résolution de cette équation, on considérera que la boîte de vitesses comporte ici uniquement deux rapports de boîte, notés $R_{th1}$ et $R_{th2}$.

La résolution de l'équation *eq12* revient alors à étudier le signe des différences suivantes :

$$\begin{cases} H_{hyb}{}^{opt}(R_{th1}) - H_{hyb}{}^{opt}(0) \\ H_{hyb}{}^{opt}(R_{th1}) - H_{hyb}{}^{opt}(R_{th2}) \end{cases}$$

Dans le cas où le moteur à combustion interne est à l'arrêt, la puissance thermomécanique $P_{th}$ est nulle, et le débit de carburant est nul, si bien que l'on peut écrire l'équation eq7 sous la forme :

$$H_{hyb}{}^{opt}(0) = \lambda.b + \lambda.B_1.P_r$$

Pour bien comprendre la manière de résoudre le problème, on peut alors considérer un exemple particulier dans lequel on fait l'hypothèse que la situation est la suivante :

$$A_1(R_{th1}) = a_1,$$

$$A_0(R_{th1}) = Q_0,$$

$$B_1(R_{th1}) = a_+,$$

$$B_1(0) = a_-,$$

$$P_{th}{}^{opt}(R_{th1}) = P_{lim}.$$

En ne considérant donc que les rapports de vitesses « 0 » et $R_{th1}$, on peut alors écrire :

$$H_{hyb}{}^{opt}(R_{th1}) - H_{hyb}{}^{opt}(0) = a_1.P_{lim} + Q_0 + \lambda.(a_+.(P_r - P_{lim}) + b) - \lambda.(a_-.P_r + b)$$

Trois cas sont alors envisageables :

- Si $P_r < \dfrac{\lambda.a_+.P_{lim} - Q_{lim}}{\lambda.(a_+ - a_-)}$

Alors $H_{hyb}{}^{opt}(R_{th1}) < H_{hyb}{}^{opt}(0)$ si bien que $R_{th}{}^{opt} = $ "0".

- Si $P_r > \dfrac{\lambda.a_+.P_{lim} - Q_{lim}}{\lambda.(a_+ - a_-)}$

Alors $H_{hyb}{}^{opt}(R_{th1}) > H_{hyb}{}^{opt}(0)$ si bien que $R_{th}{}^{opt} = R_{th1}$.

- Si $P_r = \dfrac{\lambda.a_+.P_{lim} - Q_{lim}}{\lambda.(a_+ - a_-)}$      [eq13]

Alors $H_{hyb}{}^{opt}(R_{th1}) = H_{hyb}{}^{opt}(0)$ si bien que $R_{th}{}^{opt} = R_{th1} = $ "0".

Comme le montre la figure 5, l'équation *eq13* définit donc une courbe $P_{01}$ qui sépare le cas où le rapport de boîte optimal $R_{th}{}^{opt}$ est « 0 » du cas où le rapport de boîte optimal $R_{th}{}^{opt}$ est $R_{th1}$.

Dans cet exemple particulier, on peut compléter les hypothèses de la façon suivante :

$$A_1(R_{th1}) = a_1,$$

$A_0(R_{th1}) = Q_0,$
$B_1(R_{th1}) = a+,$
$P_{th}^{opt}(R_{th1}) = Plim$
$A_1(R_{th2}) = a_1,$
$A_0(R_{th2}) = Q_0,$
$B_1(R_{th2}) = a+,$
$P_{th}^{opt}(R_{th2}) = Pr.$

En ne considérant que les rapports de vitesses $R_{th1}$ et $R_{th2}$, on peut alors écrire :

$$H_{hyb}^{opt}(R_{th1}) - H_{hyb}^{opt}(R_{th2}) = a_1.P_{lim}^1 + Q_0^1 + \lambda.(a_+.(P_r - P_{lim}^1)) - a_1.P_r - Q_0^2$$

On notera que dans cette équation, les exposants « 1 » et « 2 » permettent d'indiquer si les paramètres auxquels ils se réfèrent sont calculés dans le cas où le premier rapport de boîte $R_{th1}$ est engagé ou dans le cas où le second rapport de boîte $R_{th2}$ est engagé (le régime $\omega_{th}$ du moteur n'est en effet pas le même, si bien que ces paramètres ne présentent pas des valeurs identiques dans ces deux cas).

Trois cas sont alors envisageables :

$$- \text{Si } P_r < \frac{\lambda.a_+.P_{lim}^1 + Q_0 - Q_{lim}^1}{\lambda.a_+ - a_1}$$

Alors $H_{hvb}^{opt}(R_{th1}) < H_{hvb}^{opt}(R_{th2})$ si bien que $R_{th}^{opt} = R_{th1}$.

$$- \text{Si } P_r > \frac{\lambda.a_+.P_{lim}^1 + Q_0 - Q_{lim}^1}{\lambda.a_+ - a_1}$$

Alors $H_{hyb}^{opt}(R_{th1}) > H_{hyb}^{opt}(R_{th2})$ si bien que $R_{th}^{opt} = R_{th2}$.

$$- \text{Si } P_r = \frac{\lambda.a_+.P_{lim}^1 + Q_0 - Q_{lim}^1}{\lambda.a_+ - a_1} \qquad\qquad [eq14]$$

Alors $H_{hyb}^{opt}(R_{th1}) > H_{hyb}^{opt}(R_{th2})$ si bien que $R_{th}^{opt} = R_{th1} = R_{th2}$

Comme le montre la figure 5, l'équation *eq14* définit donc une courbe $P_{12}$ qui sépare le cas où le rapport de boîte optimal $R_{th}^{opt}$ est $R_{th2}$ du cas où le rapport de boîte optimal $R_{th}^{opt}$ est $R_{th1}$.

En pratique, le calculateur 50 pourra alors déterminer le rapport de boîte optimal $R_{th}^{opt}$ très simplement puisqu'il lui suffira, comme le montre la figure 5, de comparer la valeur de la puissance aux roues $P_r$ avec les valeurs correspondantes des courbes $P_{01}$ et $P_{12}$, compte tenu du facteur de pondération $\lambda$.

Les équations de ces courbes devront alors être simplement mémorisées dans la mémoire du calculateur 50 pour permettre au calculateur 50 de déterminer le rapport de boîte optimal $R_{th}^{op}$.

On notera ici tout d'abord que la première courbe $P_{01}$ permettra au calculateur 50 de distinguer le cas où le véhicule automobile doit être propulsé en mode « tout électrique » ($R_{th}^{opt} = "0"$) du cas où le moteur à combustion interne 22 doit être démarré ($R_{th}^{opt} = R_{th1}$).

On notera ensuite qu'on a ici défini deux courbes $P_{01}$, $P_{12}$ en envisageant un certain nombre d'hypothèses sur les paramètres $A_1$, $A_0$, $B_1$. Il existera bien entendu davantage de courbes à mémoriser dans la mémoire du calculateur 50, afin de pouvoir envisager toutes les hypothèses possibles.

On notera enfin qu'on a ici défini deux courbes $P_{01}$, $P_{12}$ en supposant que la boîte de vitesses 23 comportait deux rapports. Bien entendu, il faudra définir autant de courbes qu'il y aura de rapport de boîtes.

En conclusion, le procédé mis en oeuvre par le calculateur 50 pour déterminer le triplet $\{P_{th}^{opt}, R_{th}^{opt}, P_m^{opt}\}$ sera simple et nécessitera un temps de calcul et une ressource en terme de puissance de calculs assez faibles.

Ce procédé assurera en outre une continuité et une régularité des commandes transmises au moteur électrique 32 et au moteur à combustion interne 22, ce qui évitera tout à-coup pouvant être ressenti par les passagers du véhicule.

Ce procédé pourra s'appliquer très facilement à tout type de véhicule automobile hybride.

La présente invention n'est nullement limitée au mode de réalisation décrit et représenté, mais l'homme du métier saura y apporter toute variante conforme à l'invention. On pourrait ainsi utiliser d'autres modèles représentatifs de la consommation en énergie des deux moteurs (notamment des modèles quadratiques).

**Revendications**

1. Procédé de calcul d'une consigne de pilotage d'un groupe motopropulseur hybride de véhicule automobile (1), ledit groupe motopropulseur hybride comportant un moteur électrique (32) qui est alimenté en courant et un moteur à combustion interne (22) qui est équipé d'une boîte de vitesses (23) et qui est alimenté en carburant, ledit procédé comprenant :

   - une étape d'acquisition d'une valeur relative à une puissance ($P_r$) demandée au niveau des roues motrices (10) du véhicule automobile (1), et
   - une étape de détermination de la contribution du moteur électrique (32) et du moteur à combustion interne (22) pour satisfaire la demande de puissance ($P_r$) au niveau des roues motrices (10),
   dans lequel, à l'étape de détermination, on calcule un triplet ($P_{th}^{opt}$, $R_{th}^{opt}$, $P_m^{opt}$) de trois valeurs, dont une valeur relative à la puissance électromécanique ($P_m^{opt}$) que le moteur électrique (32) doit fournir, une valeur relative à la puissance thermomécanique ($P_{th}^{opt}$) que le moteur à combustion interne (22) doit fournir et une valeur relative au rapport ($R_{th}^{opt}$) qui doit être engagé sur la boîte de vitesses (23) pour minimiser la somme des consommations en carburant du moteur à combustion interne (22) et en courant du moteur électrique (32), **caractérisé en ce que** le triplet ($P_{th}^{opt}$, $R_{th}^{opt}$, $P_m^{opt}$) est calculé grâce à un modèle analytique de consommation en carburant (Q) du moteur à combustion interne (22) et à un modèle analytique de consommation en courant ($P_{bat}$) du moteur électrique (32), et
   **en ce que** le modèle analytique de consommation en carburant (Q) du moteur à combustion interne (22) en fonction de la valeur relative à la puissance thermomécanique ($P_{th}$) que le moteur à combustion interne (22) doit fournir est donné par l'équation suivante :

$$Q(P_{th}) = \begin{cases} a_1.P_{th} + Q_0 & si\ P_{th}\ est\ compris\ entre\ P_{th,min}\ et\ P_{lim} \\ a_2.(P_{th} - P_{lim}) + Q_{lim} & si\ P_{th}\ est\ compris\ entre\ P_{lim}\ et\ P_{th,max} \end{cases}$$

   avec $a_1$ et $a_2$ deux constantes prédéterminées telles que $a_1 < a_2$, et
   avec $Q_0$, $Q_{lim}$, $P_{th,min}$, $P_{th,max}$ et $P_{lim}$ des paramètres calculés en fonction du point de fonctionnement du moteur à combustion interne (22),
   les paramètres $Q_0$ et $Q_{lim}$ étant relatifs à des bornes de consommation en carburant du moteur à combustion interne (22), à un régime donné,
   les paramètres $P_{th,min}$ et $P_{th,max}$ étant relatifs à des bornes de puissance que le moteur à combustion interne (22) peut développer, à un régime donné,
   le paramètre $P_{lim}$ étant un paramètre de puissance.

2. Procédé de calcul selon la revendication précédente, dans lequel le modèle analytique de consommation en courant ($P_{bat}$) du moteur électrique (32) en fonction de la valeur relative à la puissance électromécanique ($P_m$) que le moteur électrique (32) doit fournir est donné par l'équation suivante :

$$P_{bat}(P_m) = \begin{cases} a_-.P_m + b & si\ P_m\ est\ compris\ entre\ P_{e,min}\ et\ 0 \\ a_+.P_m + b & si\ P_m\ est\ compris\ entre\ 0\ et\ P_{e,max} \end{cases}$$

   avec $a_-$, $a+$, $b$, $P_{e,min}$, $P_{e,max}$ des paramètres calculés en fonction du point de fonctionnement du moteur électrique (32) tels que $a_-$ est inférieur à $a+$,
   les paramètres $P_{e,min}$ et $P_{e,max}$ étant relatifs à des bornes de puissance que le moteur électrique peut développer, à un régime donné.

3. Procédé de calcul selon l'une des revendications précédentes dans lequel le triplet ($P_{th}^{opt}$, $R_{th}^{opt}$, $P_m^{opt}$) est obtenu en minimisant un Hamiltonien ($H_{hyb}$) qui est défini comme une fonction de la consommation en courant ($P_{bat}$) du moteur électrique (32) et de la consommation en carburant (Q) du moteur à combustion interne (22).

4. Procédé de calcul selon les revendications précédentes, dans lequel :

   - ledit Hamiltonien ($H_{hyb}$) s'écrit sous la forme :

$$H_{hyb}(P_{th}, P_r, \lambda) = Q(P_{th}) + \lambda . P_{bat}(P_m),$$

avec

Q($P_{th}$) qui représente la consommation en carburant (Q) du moteur à combustion interne (22),
$P_{bat}$($P_m$) qui représente la consommation en courant ($P_{bat}$) du moteur électrique (32), et
**À un facteur de pondération, et dans lequel**

- la valeur relative à la puissance thermomécanique ($P_{th}{}^{opt}$) dudit triplet ($P_{th}{}^{opt}$, $R_{th}{}^{opt}$, $P_m{}^{opt}$) est déterminée en fonction dudit facteur de pondération et de la valeur relative à la puissance ($P_r$) demandée au niveau des roues motrices (10).

5. Procédé de calcul selon la revendication précédente, dans lequel la valeur relative à la puissance thermomécanique ($P_{th}{}^{opt}$) dudit triplet ($P_{th}{}^{opt}$, $R_{th}{}^{opt}$, $P_m{}^{opt}$) est sélectionnée parmi les valeurs suivantes :

- le paramètre $P_{th,min}$,
- le paramètre $P_{th,max}$,
- le paramètre $P_{lim}$, et
- la valeur $P_r$ relative à la puissance ($P_r$) demandée au niveau des roues motrices (10).

6. Procédé de calcul selon l'une des trois revendications précédentes, dans lequel la valeur du triplet ($P_{th}{}^{opt}$, $R_{th}{}^{opt}$, $P_m{}^{opt}$) qui est relative au rapport ($R_{th}{}^{opt}$) qui doit être engagé sur la boîte de vitesses (23) est obtenue en :

- calculant la valeur dudit Hamiltonien ($H_{hyb}{}^{opt}$) pour chaque rapport ($R_{th}{}^{opt}$) pouvant être engagé sur la boîte de vitesses (23), puis en
- sélectionnant le rapport associé à la plus basse des valeurs dudit Hamiltonien ($H_{hyb}{}^{opt}$).

7. Procédé de calcul selon les revendications 4 et 6, dans lequel la valeur du triplet ($P_{th}{}^{opt}$, $R_{th}{}^{opt}$, $P_m{}^{opt}$) qui est relative au rapport ($R_{th}{}^{opt}$) qui doit être engagé sur la boîte de vitesses (23) est obtenue en fonction dudit facteur de pondération ($\lambda$) et de la valeur relative à la puissance ($P_r$) demandée au niveau des roues motrices (10).

8. Procédé de calcul selon l'une des revendications précédentes, dans lequel la valeur relative à la puissance électromécanique ($P_m{}^{opt}$) dudit triplet ($P_{th}{}^{opt}$, $R_{th}{}^{opt}$, $P_m{}^{opt}$) est déduite en fonction de la valeur relative à la puissance ($P_r$) demandée au niveau des roues motrices (10) et de la valeur relative à la puissance thermomécanique ($P_{th}{}^{opt}$) dudit triplet ($P_{th}{}^{opt}$, $R_{th}{}^{opt}$, $P_m{}^{opt}$).

**Patentansprüche**

1. Verfahren zur Berechnung eines Steuerungssollwerts für einen Hybridantriebsstrang eines Kraftfahrzeugs (1), wobei der Hybridantriebsstrang einen Elektromotor (32), der mit Strom versorgt wird, und einen Verbrennungsmotor (22) umfasst, der mit einem Getriebe (23) ausgestattet ist und der mit Kraftstoff versorgt wird, wobei das Verfahren umfasst:

- einen Schritt des Erfassens eines Werts, der sich auf eine an den Antriebsrädern (10) des Kraftfahrzeugs (1) erforderliche Leistung ($P_r$) bezieht, und
- einen Schritt des Bestimmens des Beitrags des Elektromotors (32) und des Verbrennungsmotors (22), um den Leistungsbedarf ($P_r$) an den Antriebsrädern (10) zu erfüllen,

wobei bei dem Schritt des Bestimmens ein Tripel ($P_{th}{}^{opt}$, $R_{th}{}^{opt}$, $P_m{}^{opt}$) aus drei Werten berechnet wird, darunter ein Wert, der sich auf die elektromechanische Leistung ($P_m{}^{opt}$) bezieht, die der Elektromotor (32) liefern muss, ein Wert, der sich auf die thermomechanische Leistung ($P_{th}{}^{opt}$) bezieht, die der Verbrennungsmotor (22) liefern muss, und ein Wert, der sich auf das Verhältnis ($R_{th}{}^{opt}$) bezieht, das am Getriebe (23) eingelegt werden muss, um die Summe des Kraftstoffverbrauchs des Verbrennungsmotors (22) und des Stromverbrauchs des Elektromotors (32) zu minimieren,

**dadurch gekennzeichnet, dass** das Tripel ($P_{th}{}^{opt}$, $R_{th}{}^{opt}$, $P_m{}^{opt}$) dank eines Analysemodells des Kraftstoffverbrauchs (Q) des Verbrennungsmotors (22) und eines Analysemodells des Stromverbrauchs ($P_{bat}$) des Elektromotors (32) berechnet wird, und

dadurch, dass das Analysemodell des Kraftstoffverbrauchs (Q) des Verbrennungsmotors (22) in Abhängigkeit von dem Wert, der sich auf die thermomechanische Leistung ($P_{th}$) bezieht, die der Verbrennungsmotor (22) liefern muss, durch die folgende Gleichung gegeben ist:

$$Q(P_{th}) = \begin{cases} a_1.P_{th} + Q_0 & \text{wenn } P_{th} \text{ im Bereich zwischen } P_{th,min} \text{ und } P_{lim} \\ a_2.(P_{th} - P_{lim}) + Q_{lim} & \text{wenn } P_{th} \text{ im Bereich zwischen } P_{lim} \text{ und } P_{th,max} \end{cases}$$

wobei $a_1$ und $a_2$ zwei vorbestimmte Konstanten sind, sodass $a_1 < a_2$, und

wobei $Q_0$, $Q_{lim}$, $P_{th,min}$, $P_{th,max}$ und $P_{lim}$ Parameter sind, die in Abhängigkeit vom Betriebspunkt des Verbrennungsmotors (22) berechnet werden,
wobei sich die Parameter $Q_0$ und $Q_{lim}$ auf Kraftstoffverbrauchsgrenzen des Verbrennungsmotors (22) bei einem gegebenen Gang beziehen,
wobei sich die Parameter $P_{th,min}$ und $P_{th,max}$ auf Leistungsgrenzen beziehen, die der Verbrennungsmotor (22) bei einem gegebenen Gang entwickeln kann,
wobei der Parameter $P_{lim}$ ein Leistungsparameter ist.

2. Berechnungsverfahren nach dem vorstehenden Anspruch, wobei das Analysemodell des Stromverbrauchs ($P_{bat}$) des Elektromotors (32) in Abhängigkeit von dem Wert, der sich auf die elektromechanische Leistung ($P_m$) bezieht, die der Elektromotor (32) liefern muss, durch die folgende Gleichung gegeben ist:

$$P_{bat}(P_m) = \begin{cases} a_-.P_m + b & \text{wenn } P_m \text{ im Bereich zwischen } P_{e,min} \text{ und } 0 \\ a_+.P_m + b & \text{wenn } P_m \text{ im Bereich zwischen } 0 \text{ und } P_{e,max} \end{cases}$$

wobei a-, a+, b, $P_{e,min}$, $P_{e,max}$ Parameter sind, die in Abhängigkeit vom Betriebspunkt des Elektromotors (32) berechnet werden, sodass a-kleiner ist als a+,
wobei sich die Parameter $P_{e,min}$ und $P_{e,max}$ auf Leistungsgrenzen beziehen, die der Elektromotor bei einem gegebenen Gang entwickeln kann.

3. Berechnungsverfahren nach einem der vorstehenden Ansprüche, wobei das Tripel ($P_{th}^{opt}$, $R_{th}^{opt}$, $P_m^{opt}$) durch Minimieren einer Hamiltonschen ($H_{hyb}$) erhalten wird, die als Funktion des Stromverbrauchs ($P_{bat}$) des Elektromotors (32) und des Kraftstoffverbrauchs (Q) des Verbrennungsmotors (22) definiert ist.

4. Berechnungsverfahren nach den vorstehenden Ansprüchen, wobei:

- die Hamiltonsche ($H_{hyb}$) sich in folgender Form schreibt:

$$H_{hyb}(P_{th}, P_r, \lambda) = Q(P_{th}) + \lambda.P_{bat}(P_m),$$

wobei

Q($P_{th}$) den Kraftstoffverbrauch (Q) des Verbrennungsmotors (22) darstellt,
$P_{bat}(P_m)$ den Stromverbrauch ($P_{bat}$) des Elektromotors (32) darstellt, und
$\lambda$ ein Gewichtungsfaktor ist, und wobei

- der Wert des Tripels ($P_{th}^{opt}$, $R_{th}^{opt}$, $P_m^{opt}$), der sich auf die thermomechanische Leistung ($P_{th}^{op}$) bezieht, in Abhängigkeit vom Gewichtungsfaktor und von dem Wert, der sich auf die an den Antriebsrädern (10) erforderliche Leistung ($P_r$) bezieht, bestimmt wird.

5. Berechnungsverfahren nach dem vorstehenden Anspruch, wobei der Wert des Tripels ($P_{th}^{opt}$, $R_{th}^{opt}$, $P_m^{opt}$), der sich auf die thermomechanische Leistung ($P_{th}^{op}$) bezieht, aus den folgenden Werten ausgewählt wird:

- dem Parameter $P_{th,min}$,
- dem Parameter $P_{th,max}$,
- dem Parameter $P_{lim}$, und

- dem Wert $P_r$, der sich auf die an den Antriebsrädern (10) erforderliche Leistung ($P_r$) bezieht.

6. Berechnungsverfahren nach einem der drei vorstehenden Ansprüche, wobei der Wert des Tripels ($P_{th}^{opt}$, $R_{th}^{opt}$, $P_m^{opt}$), der sich auf das Verhältnis ($R_{th}^{opt}$) bezieht, das am Getriebe (23) eingelegt werden muss, erhalten wird durch:

   - Berechnen des Werts der Hamiltonschen ($H_{hyb}^{opt}$) für jedes Verhältnis ($R_{th}^{opt}$), das am Getriebe (23) eingelegt werden kann, und anschließend
   - Auswählen des Verhältnisses, das dem niedrigsten der Werte der Hamiltonschen ($H_{hyb}^{opt}$) zugeordnet ist.

7. Berechnungsverfahren nach den Ansprüchen 4 und 6, wobei der Wert des Tripels ($P_{th}^{opt}$, $R_{th}^{opt}$, $P_m^{opt}$), der sich auf das Verhältnis ($R_{th}^{opt}$) bezieht, das am Getriebe (23) eingelegt werden muss, in Abhängigkeit vom Gewichtungsfaktor ($\lambda$) und von dem Wert, der sich auf die an den Antriebsrädern (10) erforderliche Leistung ($P_r$) bezieht, erhalten wird.

8. Berechnungsverfahren nach einem der vorstehenden Ansprüche, wobei der Wert des Tripels ($P_{th}^{opt}$, $R_{th}^{opt}$, $P_m^{opt}$), der sich auf die elektromechanische Leistung ($P_m^{opt}$) bezieht, in Abhängigkeit von dem Wert, der sich auf die an den Antriebsrädern (10) erforderliche Leistung ($P_r$) bezieht, und dem Wert des Tripels ($P_{th}^{opt}$, $R_{th}^{opt}$, $P_m^{opt}$), der sich auf die thermomechanische Leistung ($P_{th}^{opt}$) bezieht, abgeleitet wird.

**Claims**

1. Method for calculating a control setpoint of a hybrid powertrain of a motor vehicle (1), said hybrid powertrain comprising an electric motor (32) that is supplied with current and an internal combustion engine (22) that is equipped with a gearbox (23) and is supplied with fuel, said method comprising:

   - a step of acquiring a value relating to a power ($P_r$) demanded at the drive wheels (10) of the motor vehicle (1), and
   - a step of determining the contribution of the electric motor (32) and of the internal combustion engine (22) in order to satisfy the power demand ($P_r$) at the drive wheels (10),
   wherein, at the determination step, a triplet ($P_{th}^{opt}$, $R_{th}^{opt}$, $P_m^{opt}$) of three values is calculated, including a value relating to the electromechanical power ($P_m^{opt}$) that the electric motor (32) must supply, a value relating to the thermomechanical power ($P_{th}^{opt}$) that the internal combustion engine (22) must supply and a value relating to the ratio ($R_{th}^{opt}$) that must be engaged on the gearbox (23) in order to minimise the sum of the fuel consumption of the internal combustion engine (22) and the current consumption of the electric motor (32),
   **characterised in that** the triplet ($P_{th}^{opt}$, $R_{th}^{opt}$, $P_m^{opt}$) is calculated by means of an analytical model of fuel consumption (Q) of the internal combustion engine (22) and an analytical model of current consumption ($P_{bat}$) of the electric motor (32), and
   **in that** the analytical model of fuel consumption (Q) of the internal combustion engine (22) as a function of the value relating to the thermomechanical power ($P_{th}$) that the internal combustion engine (22) must supply is given by the following equation:

$$Q(P_{th}) = \begin{cases} a_1.P_{th} + Q_0 & \textit{if } P_{th} \textit{ lies between } P_{th,min} \textit{ and } P_{lim} \\ a_2.(P_{th} - P_{lim}) + Q_{lim} & \textit{if } P_{th} \textit{ lies between } P_{lim} \textit{ and } P_{th,max} \end{cases}$$

   with $a_1$ and $a_2$ two predetermined constants such that $a_1 < a_2$, and
   with $Q_0$, $Q_{lim}$, $P_{th,min}$, $P_{th,max}$ and $P_{lim}$ parameters calculated as a function of the operating point of the internal combustion engine (22),
   parameters $Q_0$, $Q_{lim}$ relating to the fuel consumption limits of the internal combustion engine, at a given speed,
   parameters $P_{th,min}$, $P_{th,max}$ relating to power limits that the internal combustion engine can develop, at a given speed,
   parameter $P_{lim}$ being a power parameter.

2. Calculation method according to the previous claim, wherein the analytical model of current consumption ($P_{bat}$) of the electric motor (32) as a function of the value relating to the electromechanical power ($P_m$) that the electric motor (32) must supply is given by the following equation:

$$P_{bat}(P_m) = \begin{cases} a_-.P_m + b & if \ P_m \ lies \ between \ P_{e,min} \ and \ 0 \\ a_+.P_m + b & if \ P_m \ lies \ between \ 0 \ and \ P_{e,max} \end{cases}$$

with $a_-$, $a+$, $b$, $P_{e,min}$, $P_{e,max}$ parameters calculated as a function of the operating point of the electric motor (32) such that $a_-$ is less than $a+$,

parameters $P_{e,min}$, $P_{e,max}$ relating to power limits that the electric motor can develop, at a given speed.

3. Calculation method according to any one of the preceding claims, wherein the triplet ($P_{th}^{opt}$, $R_{th}^{opt}$, $P_m^{opt}$) is obtained by minimising a Hamiltonian ($H_{hyb}$) that is defined as a function of the current consumption ($P_{bat}$) of the electric motor (32) and the fuel consumption (Q) of the internal combustion engine (22).

4. Calculation method according to the preceding claims, wherein:

- said Hamiltonian ($H_{hyb}$) is written in the form:

   $H_{hyb}$ ($P_{th}$, $P_r$, $\lambda$) = Q($P_{th}$) + $\lambda.P_{bat}(P_m)$, with
   Q($P_{th}$) which represents the fuel consumption (Q) of the internal combustion engine (22),
   $P_{bat}(P_m)$ which represents the current consumption ($P_{bat}$) of the electric motor (32), and
   $\lambda$ a weighting factor, and wherein

- the value relating to the thermomechanical power ($P_{th}^{opt}$) of said triplet ($P_{th}^{opt}$, $R_{th}^{opt}$, $P_m^{opt}$) is determined as a function of said weighting factor and of the value relating to the power ($P_r$) demanded at the drive wheels (10).

5. Calculation method according to the preceding claim, wherein the value relating to the thermomechanical power ($P_{th}^{opt}$) of said triplet ($P_{th}^{opt}$, $R_{th}^{opt}$, $P_m^{opt}$) is selected from the following values:

- the parameter $P_{th,min}$,
- the parameter $P_{th,max}$,
- the parameter $P_{lim}$, and
- the value $P_r$ relating to the power ($P_r$) demanded at the drive wheels (10).

6. Calculation method according to any of the preceding three claims, wherein the value of the triplet ($P_{th}^{opt}$, $R_{th}^{opt}$, $P_m^{opt}$) that relates to the ratio ($R_{th}^{opt}$) that must be engaged on the gearbox (23) is obtained by:

- calculating said Hamiltonian ($H_{hyb}^{opt}$) for each ratio ($R_{th}^{opt}$) that can be engaged on the gearbox (23), and then
- selecting the ratio associated with the lowest of the values of said Hamiltonian ($H_{hyb}^{opt}$).

7. Calculation method according to claims 4 and 6, wherein the value of the triplet ($P_{th}^{opt}$, $R_{th}^{opt}$, $P_m^{opt}$) that relates to the ratio ($R_{th}^{opt}$) that must be engaged on the gearbox (23) is obtained as a function of said weighting factor ($\lambda$) and of the value relating to the power ($P_r$) demanded at the drive wheels (10).

8. Calculation method according to any of the preceding claims, wherein the value relating to the electromechanical power ($P_m^{opt}$) of said triplet ($P_{th}^{opt}$, $R_{th}^{opt}$, $P_m^{opt}$) is deduced as a function of the value relating to the power ($P_r$) demanded at the drive wheels (10) and of the value relating to the thermomechanical power ($P_{th}^{opt}$) of said triplet ($P_{th}^{opt}$, $R_{th}^{opt}$, $P_m^{opt}$).

# Fig.1

# Fig.2

EP 3 589 519 B1

# Fig.3A

# Fig.3B

# Fig.3C

# Fig.5

Fig.4

## RÉFÉRENCES CITÉES DANS LA DESCRIPTION

**Documents brevets cités dans la description**

- WO 2016070887 A
- DE 102015201549
- DE 102013014667
- FR 3014062 A1